# EUROPEAN PATENT SPECIFICATION

(11) **EP 1 869 737 B1**
(45) Date of publication and mention of the grant of the patent: **12.05.2021**
(21) Application number: 06738462.8
(22) Date of filing: 16.03.2006
(51) Int. Cl.: G01B 9/02, G01D 5/26, G02B 6/32, G02B 6/34

(54) **HIGH INTENSITY FABRY-PEROT SENSOR**
HOCHINTENSITÄTS-FABRY-PEROT-SENSOR
CAPTEUR FABRY-PEROT HAUTE INTENSITE

(30) Priority: 16.03.2005 US 662202 P; 17.02.2006 US 774289 P
(43) Date of publication of application: 26.12.2007
(73) Proprietor: Davidson Instruments, Inc., The Woodlands, TX 77393-0100 (US)
(72) Inventor: GILBER, William, N., The Woodlands, TX 77381 (US); JEFFERS, Larry, A., Minerva, Ohio (US); LOPUSHANSKY, Richard, L., The Woodlands, TX (US); GILLHAM, Frederick, J., The Woodlands, TX 77381 (US)
(74) Representative: Müller-Boré & Partner Patentanwälte PartG mbB
(86) International application number: PCT/US2006/009400
(87) International publication number: WO 2006/101923

(56) References cited:
- GB-A- 1 066 949
- US-A- 4 572 669
- US-A- 5 349 439
- US-A- 5 920 670
- US-A- 5 920 670
- US-A1- 2002 016 536
- US-A1- 2002 016 536
- US-A1- 2003 039 428
- US-A1- 2004 086 228
- US-A1- 2004 086 228
- US-A1- 2005 036 742
- US-A1- 2005 036 742
- US-B1- 6 430 337
- US-B1- 6 430 337
- US-B1- 6 854 899
- US-B1- 6 854 899

## Description

### FIELD OF INVENTION

The present invention relates to sensors for measuring the absolute length of a gap in a Fabry-Perot interferometer, and more particularly to a Fabry-Perot sensor that provides a more intense signal.

### BACKGROUND OF THE INVENTION

The use of Fabry-Perot interferometers to measure the absolute length of a gap is known. Use of a ball lens to collimate light shining on a Fabry-Perot interferometer is needed for sensors measuring gaps exceeding about 30 µm in order to maintain a uniform optical path length for all light rays and to assure a high percentage of the light reflected by the interferometer is captured by the fiber. However, if the light delivery fiber is not precisely centered on the ball lens axis or if the interferometer is not precisely perpendicular to the axis of the incident light transmitted by the ball lens, then the reflected light from the diaphragm does not re-enter the fiber because the reflected light spot that is re-imaged by the ball lens is not centered on the end of the input fiber. As a result, if insufficient light reflected from the sensor re-enters the fiber, the results from the Fabry-Perot interferometer-based sensor are compromised.

Accordingly, a Fabry-Perot interferometer-based sensor with a ball lens and alignment scheme that reflects high intensity light signals would provide benefits such as improved power budget, improved signal to noise ratio, and would be welcomed by the industry.

US 4,572,669 A discloses a method and related apparatus for implementing a unique multiple beam fringe sensor that is adapted to be interfaced with a low cost, compact fibre optic transmission system in order to provide an accurate digital representation of a physical parameter (e.g. temperature) of a remote sample. The sensor is fabricated so as to include a Fabry-Perot gap formed between the ends of two mated optical fibres. By examining the optical characteristics of light that is transmitted through the Fabry-Perot sensor gap, an indication of gap width can be ascertained. Accordingly, a change in Fabry-Perot sensor gap width is related to a change in the particular physical parameter to be measured. In another example, a second unique multiple beam fringe sensor having a Fabry-Perot gap is disclosed that is also adapted to provide an accurate digital representation of a physical parameter (e.g. temperature) of a remote sample. The sensor may be fabricated in two segments. A fibre containing segment includes each of a driving optical fibre for supplying incident light signals to the Fabry-Perot gap and a sensing optical fibre for receiving output light signals that have been transmitted twice through the Fabry-Perot gap, the optical characteristics of which output signals provide an indication of the parameter to be sensed. A transducer segment includes the Fabry-Perot gap formed therein and means responsive to the physical parameter for changing the width of the Fabry-Perot gap and, accordingly, the optical characteristics of the light signals passing therethrough.

US 5,349,439 A discloses a measuring device comprising a light source with a wide spectrum feeding an optical sensor through an optical fibre. The sensor comprises an interferometer adjusted to a dull tint and an optical component sensitive to a measured parameter, which may be either a pressure, a measured displacement or an index of refraction of a fluid, a readout device includes the photodetector, a processing unit and an optical wedge for producing fringes, whose lateral positions, in contrast, are representative of the spectrum of the flux leaving the interferometer and analyzed by the photodetector. The processing unit measures the lateral position of the fringe and converts it into a value of the parameter P.

US 2003/039428 A1 discloses an arrangement in which low coherence light of wide range is fed into a Fabry-Perot load cell having a measured clearance varied in response to physical quantities such as force and pressure or the like to modulate its wavelength. The measured clearance is calculated by the variable gap Fabry-Perot interferometer and the signal processing part in the optical sensor and further the physical quantities are measured.

US 2004/086228 A1 discloses a method for making a fibre optic Fabry-Perot sensor that includes securing an optical fibre to a substrate, and forming at least one gap in the optical fibre after the optical fibre is secured to the substrate to define at least one pair of self-aligned opposing spaced apart optical fibre end faces for the Fabry-Perot sensor. Preferably, an adhesive directly secures the at least one pair of optical fibre portions to the substrate. The opposing spaced apart optical fibre end faces are self-aligned because the pair of optical fibre end portions are formed from a single fibre which has been directly secured to the substrate. Also, each of the self-aligned spaced apart optical fibre end faces may be substantially rounded due to an electrical discharge used to form the gap. This results in integral lenses being formed as the end faces of the fibre portions.

US 6,854,899 B1 discloses a ferrule for an optical fibre is characterised in that the ferrule is produced from plastics material and is welded on the optical fibre, which also consists of plastics material, preferably by ultrasound. The cladding of the optical fibre comprises depressions which on welding also produce an interlocking fit in addition to the material connection.

US 5,920,670 A discloses an optical fibre connector ferrule having a fibre engaging and alignment surface for engaging and aligning at least one optical fibre. The ferrule also has a connector engagement surface. Additionally, the connector ferrule of the present invention has the capability of providing multiple alignment methods for providing compatibility with many different connector devices. Examples of the multiple alignment methods include ball and socket alignment, pin and socket alignment, and edge alignment methods.

US 6,430,337 B1 discloses an optical system with an optical assembly and a wavelength division multiplexer surface for transmitting a light beam. The optimal alignment of these light beams is accomplished by adjusting a steering device, which includes an optical wedge or a universal coupling, until the light path of the transmitted light beam through the optical assembly aligns with the light path of the transmitted light beam through the wavelength division multiplexing surface.

US 2005/036742 A1 discloses a molded fiber optic ferrule that includes a ferrule body having an end face and a geometry feature integrally formed on an exterior surface of the ferrule body. The ferrule body defines a plurality of fiber bores for receiving end portions of optical fibers and at least one opening through the end face adapted to receive an alignment member for aligning the optical fibers with corresponding end portions of the opposing optical fibers of a mating multifiber ferrule. The geometry feature may include a geometric reference feature or an end face having a first surface normal to the longitudinal axis of the ferrule body and a second surface disposed at an angle relative to the first surface and the longitudinal axis. The geometric reference feature may be utilized to determine the angularity of the end face or the height of the optical fibers relative to the surface of the end face.

US 2002/016536 A1 discloses a non-invasive near infrared spectrophotometric monitoring transducer assembly that includes a housing member, which is adhered directly on a patient's skin.

GB 1,066,949 A discloses an interferometic optical goniometer comprises a stator, Fig. 1A, for producing a pair of separated beams of radiation which impinge respectively on cube corner reflectors or other reflectors of a multiple reflecting kind, which are mounted on a gonior for angular movement as a unit about an axis perpendicular to the beams, the reflectors reflecting back beams in the same angular direction relative to the incident beams and regardless, within limits, of the angular position of the gonior to recombining means mounted on the stator, for producing interference fringes.

### SUMMARY OF THE INVENTION

The invention provides a sensor assembly according to claim 1.

Advantageous embodiments of the invention are defined in the dependent claims.

### DESCRIPTION OF THE DRAWINGS

Operation may be better understood by reference to the following detailed description taken in connection with the following illustrations, wherein:
Figure 1A is a concept drawing of a Fabry-Perot interferometer based sensor assembly with a ball lens and Fabry-Perot gap, wherein the window is a wedge with nonparallel surfaces.
Figure 1B is a concept drawing of a Fabry-Perot interferometer based sensor assembly with a ball lens, a Fabry-Perot gap, and a wedge-shaped spacer that is used with a window having parallel surfaces.
Figure 2 is a concept drawing of sensor assembly with ball lens and Fabry-Perot gap, wherein the two surfaces of the window are plane parallel (where one surface is a first reflector in a Fabry-Perot interferometer) and the transducer body is machined at the desired angle to maximize the reflected light signal.
Figure 3 is a ray trace drawing of a 2mm diameter ball lens with de-centering of the delivery fiber relative to the ball lens and tilt of the diaphragm relative to the fiber, where the lens-to-window spacing = 0.1mm; the window thickness = 0.7mm; the window-reflector spacing (gap) = 1 mm; the fiber de-center = .05mm; and the tilt angle = 0.5°.
Figure 4 is a ray trace drawing of a 2mm diameter ball lens with de-centering of the delivery fiber relative to the ball lens and no tilt of the diaphragm relative to the fiber (i.e., reflected rays do not re-enter fiber), where the lens-window spacing = 0.1mm; the window thickness = 0.7mm; the window-reflector spacing (gap) = 1 mm; the fiber de-center = .05mm; and the tilt angle = 0.
Figure 5 shows a cross section of a second reflector in the Fabry-Perot interferometer with a mesa diaphragm configuration.
Figure 6 shows a cross section of a second reflector in the Fabry-Perot interferometer with a plug diaphragm configuration.
Figure 7 shows a cross section of a second reflector in the Fabry-Perot interferometer with a bellows diaphragm configuration.
Figure 8 shows a cross section of a second reflector in the Fabry-Perot interferometer with a spherical depression.
Figure 9 shows a flexible transducer incorporating an embodiment of a Fabry-Perot interferometer based sensor.
Figure 10 shows a cross-section drawing of ball and socket alignment device of an optical fiber with fused ball lens.

### DETAILED DESCRIPTION

While the present invention is described with reference to the embodiments described herein, it should be clear that the present invention should not be limited to such embodiments. Therefore, the description of the embodiments herein is illustrative of the present invention and should not limit the scope of the invention as claimed.

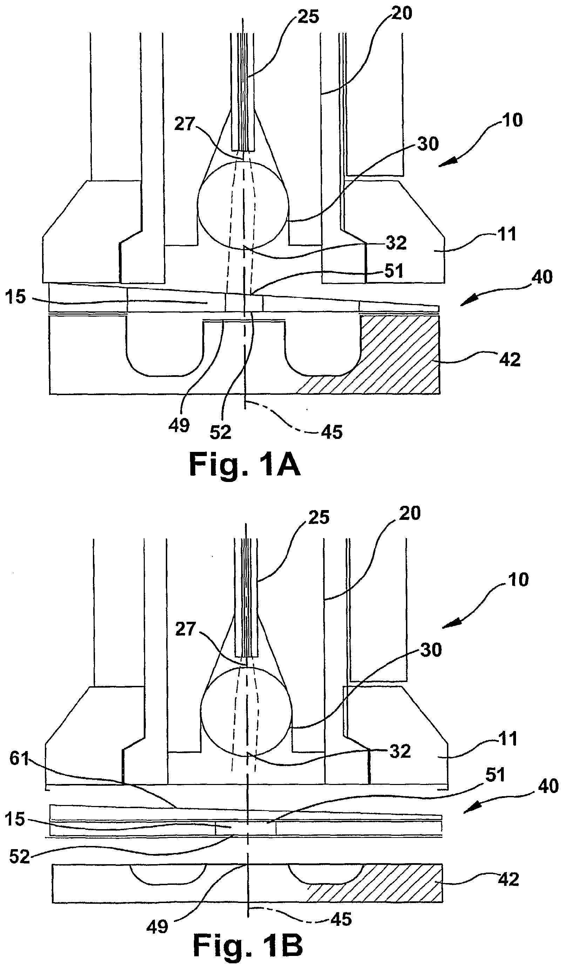

To obtain the maximum light intensity using a Fabry-Perot interferometer based sensor, it is necessary to assure the optical fiber is precisely centered on the lens optical axis and the second reflector in the Fabry-Perot interferometer is precisely perpendicular to the beam of light transmitted from the lens. Since these conditions cannot be met precisely in manufacturing practice, certain adjustments are necessary to achieve these results. An embodiment of a Fabry-Perot interferometer based sensor 10 is shown in FIG. 1A. In this embodiment, a wedge shaped window assembly 15 is used rather than a plane-parallel window as an alignment device. The Fabry-Perot interferometer based sensor 10 comprises a transducer body 11, a ferrule 20, an optical fiber 25 having an optical fiber axis 27, a lens 30 having a lens optical axis 32, and a Fabry-Perot sensor 40. Despite only a ball lens being shown in FIG. 1, any sort of lens that focuses and collimates light can be used, e.g., a graded index lens or a ball lens. The Fabry-Perot sensor 40 comprises a wedge shaped window assembly 15 and a diaphragm 42 having an optical axis 45 and a reflective surface 49. The wedge shaped window assembly 15 comprises one surface 52 that serves as the first partially reflector in a Fabry-Perot interferometer where the window assembly 15 is located between the lens 30 and a second reflector 49 in the Fabry-Perot interferometer, which allows for proper operation of the invention with long gaps. Rotation of the wedge-shaped window assembly 15 causes a change in the angle of refraction into and out of the window assembly 15 until the window assembly 15 is in the precise rotational location where the column or beam of light transmitted from the lens 30, is perpendicular to the first reflective surface 52 on the window assembly 15. Additionally, the lens optical axis 32 is perpendicular to the surface 49 of the diaphragm 42, as well as the optical axis 27 of the optical fiber 25 being perpendicular to the first reflective surface 52 of the window assembly 15 and the surface 49 of the diaphragm 42.

Alternatively, the window surfaces 51, 52 can be maintained parallel to each other and parallel to the second reflector surface 49 in the Fabry-Perot sensor. Plane-parallel windows are easier to manufacture. In this embodiment, the alignment device comprises a wedge-shaped spacer 61 located between the lens and the reflective surface as shown in FIG. 1B. Accordingly, to provide the angle tuning, the wedge-shaped spacer 61 is inserted until the column or beam of light transmitted from the lens 30, is perpendicular to the reflective surface on the diaphragm. Spacers 61 with different wedge angles can be matched to different transducer bodies to correct for variation in manufacturing tolerances of the transducer bodies and to optimize light transmission.

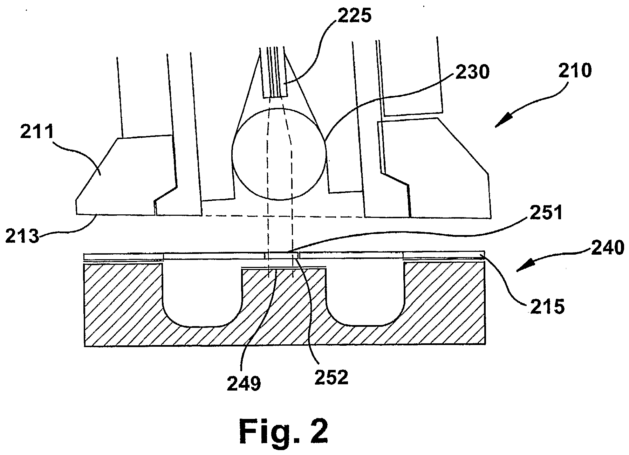

As shown in Figure 2, a non-claimed example of a Fabry-Perot interferometer based sensor 210 is shown. In this example, the Fabry-Perot interferometer based sensor 210 maintains the window surfaces 251, 252 parallel to each other and parallel to the second reflector surface 249 in the Fabry-Perot sensor 240. To provide the angle tuning, the alignment device comprises a surface 213 of the transducer body 211 that mates with the window assembly 215 that is machined at the desired angle after the ball lens 230 and optical fiber 225 assembly are bonded. In this example, the window assembly 215 does not need to be rotated to bring the window 215 into precise alignment with the transducer 211. It is simply attached to the transducer body 211 at any rotational position. The transducer body 211 is machined at a predetermined angle to produce the desired tilt angle of the Fabry-Perot interferometer based sensor. In other words, the alignment device comprises the transducer body 211 having its end surface or face 213 machined at an angle relative to its axis to align the beam of light transmitted from the lens perpendicular with the reflective surface 249 of the diaphragm. The desired tilt angle of the transducer body 211 is also when a light beam transmitted from the ball lens 230 is perpendicular to the end face 213 of the transducer body 211. This ensures the light beam is perpendicular to the diaphragm surface 249, as shown in FIG. 2. This approach can also be used even when there is no ball lens and no window, to correct for any misalignment of the light beam with the transducer body and second reflector of the Fabry-Perot sensor, i.e. the diaphragm surface.

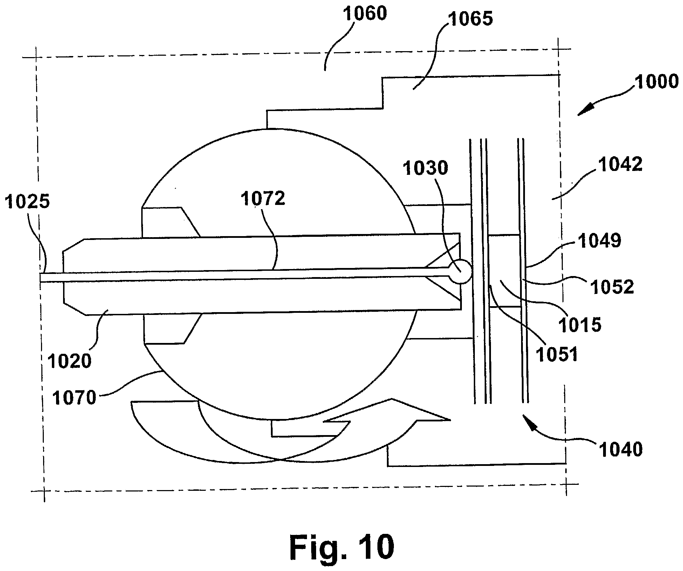

In an example not forming part of the invention, the method for pointing the light beam to achieve perpendicularity with the diaphragm is to use a metal ball-and-socket assembly shown in Figure 10. In this example the Fabry-Perot interferometer based sensor 1000 comprises a ferrule 1020, an optical fiber 1025, a lens 1030, a Fabry-Perot sensor 1040, and an alignment device. The alignment device comprises a body 1060 having a socket 1065, and a ball 1070. The Fabry-Perot sensor 1040 comprises a window assembly 1015 and a diaphragm 1042. The window assembly 1015 comprises one surface 1052 that serves as the first reflector in a Fabry-Perot interferometer where the window 1015 is between the lens 1030 and a second reflector 1049 in the Fabry-Perot interferometer. This allows for proper operation in the case of long gaps. The window assembly 1015 also includes another surface 1051 parallel to the surface 1052. The ball 1070 can be a metal ball, but is not limited to such. It can be of any material. The ball 1070 is rotatably attached in the socket 1065. Held inside the metal ball 1070 is the ferrule 1020 that holds the optical fiber 1025 and lens 1030. The metal ball 1070 can be rotated in its mating socket 1065 through two degrees of freedom about the center-of-rotation 1072, as shown by the arrow. In this manner the light beam angle transmitted from the lens 1030 is fine-tuned to be perpendicular to the diaphragm 1042 surface 1049.

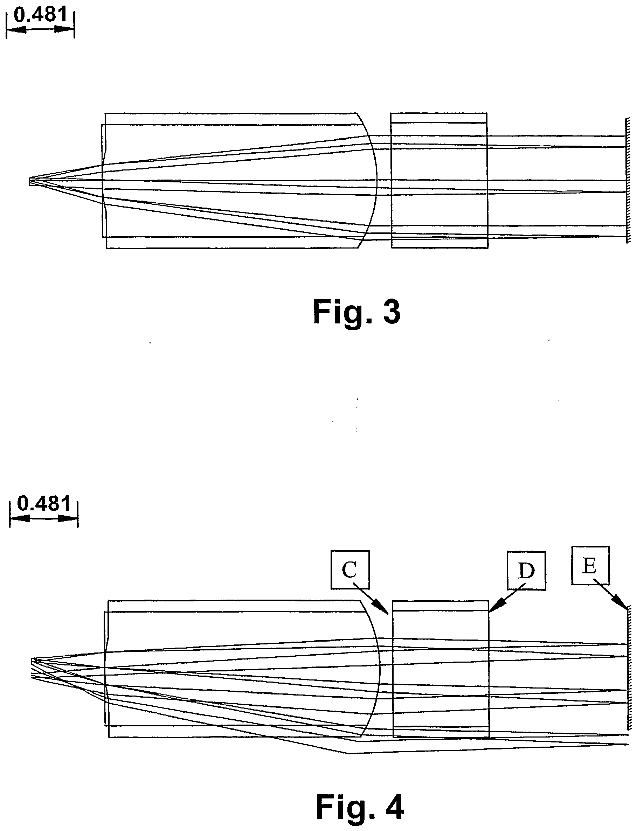

Various alternatives have been modeled using optical ray tracing software. In one embodiment, a 2mm diameter ball lens that is configured according to the drawing in Figure 3 has the design parameters presented in Table 1.

**Table 1 Parameter definitions for design in Figure 3.**

| For a lens with 2mm FS ball w 0.7mm thick window | | | | |
|---|---|---|---|---|
| **SRF** | **RADIUS** | **THICKNESS** | **APERTURE RADIUS** | **GLASS** |
| OBJ | -- | 0.530000 | 0.025000 | AIR |
| AST | 1.000000 | 2.000000 | 0.119528 AS | FK3 (fused silica) |
| 2 | -1.000000 | 0.100000 | 0.418365 S | AIR |
| 3 | -- | 0.700000 | 0.420979 S | BK7 (glass) |
| 4 | -- | 1.000000 | 0.433099 S | AIR |
| 5 | -- | -1.000000 | 0.459240 S | REFL_HATCH * |
| 6 | -- | -0.700000 | 0.485381 S | BK7 |
| 7 | -- | -0.100000 | 0.497501 S | AIR |
| 8 | -1.000000 | -2.000000 | 0.500115 S | FK3 |
| 9 | 1.000000 | -0.530000 | 0.221589 S | AIR |
| IMS | -- | | 0.060116 S | |

| | | | | |
|---|---|---|---|---|
| *TILT/DECENTER DATA | | | | |

| | | | | | | | | |
|---|---|---|---|---|---|---|---|---|
| 0 | DT | 1 | DCX | -- | DCY | 0.050000 | DCZ | -- |
| | | | TLA | -- | TLB | -- | TLC | -- |
| 3 | DT | 1 | DCX | -- | DCY | -- | DCZ | -- |
| | | | TLA | -0.500000 | TLB | -- | TLC | -- |
| 5 | DT | 1 | DCX | -- | DCY | -- | DCZ | -- |
| | | | TLA | -0.500000 | TLB | -- | TLC | -- |
| 7 | DT | 1 | DCX | -- | DCY | -- | DCZ | -- |
| | | | TLA | -0.500000 | TLB | -- | TLC | -- |

The tilt angle is an input parameter to the ray trace. The same tilt angle is applied to each window surface C and D and the reflector E. Figure 4 shows what happens if the fiber de-center remains 0.05mm and the tilt angle is set to 0. The reflected rays miss the end of the fiber. Compare Figure 4 with Figure 3, where the reflected rays re-enter the fiber. The object and image size in Figure 3 is roughly .065mm (total spot size, not rms). In Figure 4, the size of the image (reflected spot) is roughly .115mm and is not centered about the object (fiber end).

As previously discussed, a configuration to collimate light shining on the diaphragm of a fiber optic Fabry-Perot pressure sensor is shown in Figures 1 and 2. A light delivery fiber and a ball lens are not attached to one another.

In addition to the alignment issues caused by the non-attached ball lens and fiber, the non-attached case results in two unwanted reflective surfaces (the fiber end and the ball lens input surface) that could interfere with the desired signal from the Fabry-Perot sensor. In the example shown in Figure 10, the ball lens 1030 is attached to the optical fiber 1025. More specifically, the ball lens 1030 is fused and centered on the end of the optical fiber 1025 minimizing the de-centering problem and eliminating two unwanted reflective surfaces. A ball lens is fused to the silica optical fiber by heating the end of the fiber to the melting point. During melting of the fiber, surface tension produces a sphere of transparent silica, and when the melted silica refreezes, the ball lens is permanently fused to the end of the fiber. Alternatively, the ball lens 1030 can be bonded to the optical fiber 1025 using an adhesive. The typical diameter of the ball lens formed in this manner is 340µm.

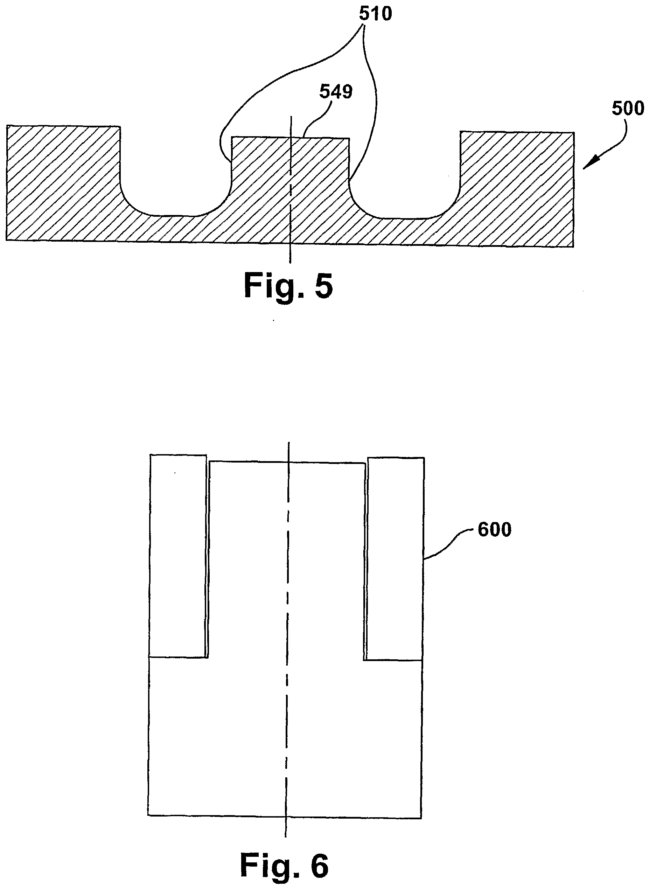

An additional way to improve the performance of the Fabry-Perot interferometer based sensor is to machine a feature (such as a circular groove) into the diaphragm that causes the surface of the diaphragm to translate without bending as the diaphragm deflects. This feature could be configured as a mesa 500 (which is the circular groove cut into the diaphragm substantially surrounding the flat mesa reflective surface of the diaphragm), a plug 600, or a bellows 700 as depicted in Figures 5, 6, and 7, respectively. As shown in FIG. 5, the mesa diaphragm 500 includes a circular groove 510 cut therein. As shown, the circular groove 510 surrounds the reflective surface 549 of the diaphragm 500.

Another way to improve the performance of the Fabry-Perot interferometer based sensor 10 is to attach a glass plate and/or dielectric coating 49 to the surface of the diaphragm 42 that allows the reflectance of the diaphragm 42 to be optimized and to remain uniform with time and temperature.

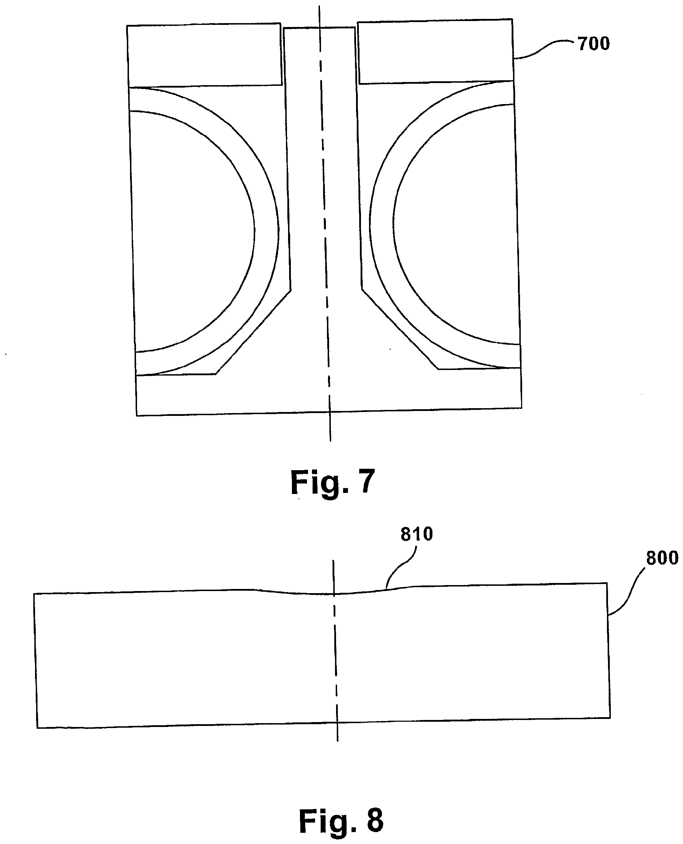

Additionally, the performance of the Fabry-Perot interferometer based sensor could be improved by machining a concave spherical depression 810 as depicted in Figure 8 in the center of the diaphragm 800 to provide modal control of the Fabry-Perot gap. The depth of the spherical depression must be less than the minimum gap that is to be measured with the Fabry-Perot sensor.

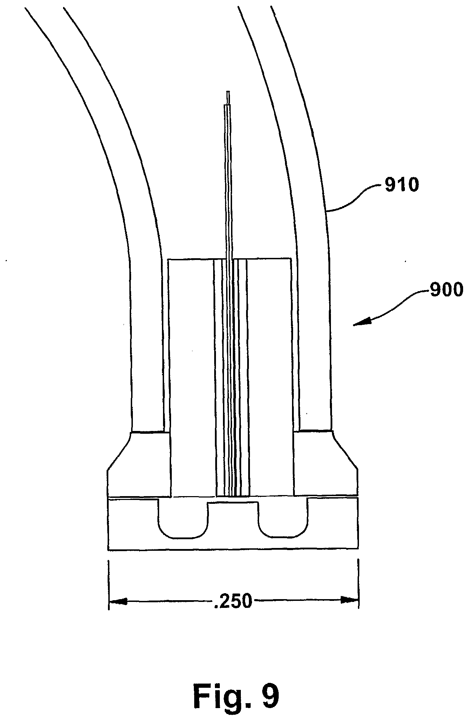

The features of the second reflector in the Fabry-Perot interferometer based sensor combine to enable a transducer head 900 to be fabricated that is very short and very small in diameter. The small size allows the transducer head 900 to be placed on then end of a flexible probe 910 for use in locations where space and access are very limited, forming a flexible transducer. In gas turbine applications where pressure pulsations in the combustor are to be monitored, it is desirable to install the pressure transducers and other sensors as close as possible to the combustion zone. Combustor baskets in Siemens Westinghouse turbines contain J-tubes used to examine the combustor basket with a horoscope. A flexible transducer may be installed in this location but there are physical limitations to the size of the transducer head and the pigtail assembly that contains the leads. It is straightforward to design and build a fiber optic transducer that fits within the size envelope defined by the gas turbine combustor basket J-tube. One design is shown in Figure 9. The size constraints include the diameter and length of the transducer and the flexibility of the pigtail assembly that must be pressure sealed.

While the present invention has been described with reference to the preferred embodiment, obviously other embodiments, modifications, and alternations could be ascertained by one skilled in the art upon reading the present disclosed. The present invention is defined in the appended claims and covers these other embodiments, modifications, and alterations provided that they fall within the scope of the claims.

## Claims

1. A sensor assembly comprising:
an optical fiber (25) having an optical axis (27);
a lens (30) in optical communication with said optical fiber (25), said lens (30) having an optical axis (32) and said lens (30) capable of transmitting a beam of light;
a reflective surface (49), said reflective surface (49) spaced from said lens (30) such that said beam of light transmitted from said lens (30) is capable of reflecting from said reflective surface (49) back to said lens (30); and
an alignment device comprising a wedge shaped window (15) or a wedge shaped spacer (61) located between said lens (30) and said reflective surface (49) and positioned such that, in use, it aligns said beam of light transmitted from said lens (30) substantially perpendicularly with said reflective surface (49).

2. The sensor assembly of claim 1, wherein the alignment device comprises the wedge shaped spacer (61) located between said lens (30) and said reflective surface (49) and positioned such that, in use, it aligns said beam of light transmitted from said lens (30) substantially perpendicularly with said reflective surface (49),
the sensor assembly further comprising:
a transparent window (15) with a partially reflective surface (52), wherein said partially reflective surface (52) of said window (15) is substantially parallel with and is separated by a gap from said reflective surface (49), said optically transparent window (15) and said reflective surface (49) forming a Fabry-Perot sensor (40).

3. The sensor assembly of claim 2, wherein said lens (30) comprises at least one of: a ball lens (230); a graded index lens; a lens that focuses light; and a lens that collimates light.

4. The sensor assembly of claim 3, further comprising a ferrule (20) encasing said optical fiber (25), said ferrule (20) aligning said optical axis (27) of said optical fiber (25) with said optical axis (32) of said lens (30).

5. The sensor assembly of claim 3, wherein said ball lens (230) is attached to said optical fiber (25) to align said optical axis (27) of said optical fiber (25) with said optical axis (32) of said lens (30).

6. The sensor assembly of claim 5, wherein said ball lens (230) is attached to said optical fiber (25) by melting or bonding said ball lens (230) to said optical fiber (25).

7. The sensor assembly of claim 4, wherein said ball lens (230) is not attached to said optical fiber (25).

8. The sensor assembly of claim 1, wherein said reflective surface (49) is a diaphragm (42).

9. The sensor assembly of claim 8, wherein said diaphragm (42) comprises at least one of: a flat diaphragm; a mesa diaphragm; a plug diaphragm; and a bellows diaphragm.

10. The sensor assembly of claim 8, wherein said diaphragm (42) has a dielectric reflective surface.

11. The sensor assembly of claim 10, wherein said diaphragm (42) comprises a mesa diaphragm (500) , said mesa diaphragm (500) comprising a circular groove (510) substantially surrounding said dielectric reflective surface.

12. The sensor assembly of claim 8, wherein said diaphragm (42) has a flat or a concave reflective surface.

13. The sensor assembly of claim 1, further comprising a flexible tube (910) encasing at least a portion of said optical fiber (25) to form a flexible transducer.

14. The sensor assembly of claim 1, wherein the alignment device comprises the wedge shaped spacer (61) located between said lens (30) and said reflective surface (49) and positioned such that, in use, it aligns said beam of light transmitted from said lens (30) substantially perpendicularly with said reflective surface (49),
wherein the sensor is a Fabry-Perot sensor assembly and the lens (30) is a ball lens; the sensor assembly further comprising:
a window (15) having a first surface (51) and a second surface (52);
a diaphragm (42) spaced from and parallel to said second surface (52) of said window (15), said diaphragm (42) including the reflective surface (49), and wherein the reflective surface (49) is partially reflective.

15. The sensor assembly of claim 14, wherein said ball lens (30) is attached to said optical fiber (25).

16. The sensor assembly of claim 15, wherein attaching said ball lens (30) to said fiber (25) is accomplished by melting an end of said fiber (25) in a controlled manner.

17. The sensor assembly of claim 14, further comprising a flexible tube (910) encasing at least a portion of said optical fiber (25) to form a flexible transducer.

## Patentansprüche

1. Sensorbaugruppe, umfassend:
eine optische Faser (25), die eine optische Achse (27) aufweist;
eine Linse (30) in optischer Verbindung mit der optischen Faser (25), wobei die Linse (30) eine optische Achse (32) aufweist und die Linse (30) in der Lage ist, einen Lichtstrahl durchzulassen;
eine reflektierende Oberfläche (49), wobei die reflektierende Oberfläche (49) von der Linse (30) beabstandet ist, sodass der von der Linse (30) durchgelassene Lichtstrahl in der Lage ist, von der reflektierenden Oberfläche (49) zurück zu der Linse (30) reflektiert zu werden; und
eine Ausrichtungsvorrichtung, die ein keilförmiges Fenster (15) oder einen keilförmigen Abstandshalter (61) umfasst, das/der sich zwischen der Linse (30) und der reflektierenden Oberfläche (49) befindet und so positioniert ist, dass es/sie bei der Verwendung den von der Linse (30) durchgelassenen Lichtstrahl im Wesentlichen senkrecht zu der reflektierenden Oberfläche (49) ausrichtet.

2. Sensorbaugruppe nach Anspruch 1, wobei die Ausrichtungsvorrichtung den keilförmigen Abstandshalter (61) umfasst, der sich zwischen der Linse (30) und der reflektierenden Oberfläche (49) befindet und derart positioniert ist, dass er bei der Verwendung den von der Linse (30) durchgelassenen Lichtstrahl im Wesentlichen senkrecht zu der reflektierenden Oberfläche (49) ausrichtet, wobei die Sensorbaugruppe ferner umfasst:
ein transparentes Fenster (15) mit einer teilweise reflektierenden Oberfläche (52), wobei die teilweise reflektierende Oberfläche (52) des Fensters (15) im Wesentlichen parallel zu der reflektierenden Oberfläche (49) und durch einen Spalt davon getrennt ist, wobei das optisch transparente Fenster (15) und die reflektierende Oberfläche (49) einen Fabry-Perot-Sensor (40) bilden.

3. Sensorbaugruppe nach Anspruch 2, wobei die Linse (30) mindestens eines umfasst von: einer Kugellinse (230); einer Gradientenlinse; einer Linse, die Licht fokussiert; und/oder einer Linse, die Licht kollimiert.

4. Sensorbaugruppe nach Anspruch 3, die ferner eine Hülse (20) umfasst, die die optische Faser (25) umhüllt, wobei die Hülse (20) die optische Achse (27) der optischen Faser (25) mit der optischen Achse (32) der Linse (30) ausrichtet.

5. Sensorbaugruppe nach Anspruch 3, wobei die Kugellinse (230) an der optischen Faser (25) befestigt ist, sodass die optische Achse (27) der optischen Faser (25) mit der optischen Achse (32) der Linse (30) ausgerichtet ist.

6. Sensorbaugruppe nach Anspruch 5, wobei die Kugellinse (230) durch Schmelzen oder Binden der Kugellinse (230) an die optische Faser (25) mit der optischen Faser (25) verbunden ist.

7. Sensorbaugruppe nach Anspruch 4, wobei die Kugellinse (230) nicht an der optischen Faser (25) befestigt ist.

8. Sensorbaugruppe nach Anspruch 1, wobei die reflektierende Oberfläche (49) eine Membran (42) ist.

9. Sensorbaugruppe nach Anspruch 8, wobei die Membran (42) mindestens eines umfasst von: einer Flachmembran; einer Mesa-Membran; einer Zylindermembran; und/oder einer Balgmembran.

10. Sensorbaugruppe nach Anspruch 8, wobei die Membran (42) eine dielektrische reflektierende Oberfläche aufweist.

11. Sensorbaugruppe nach Anspruch 10, wobei die Membran (42) eine Mesa-Membran (500) umfasst, wobei die Mesa-Membran (500) eine kreisförmige Nut (510) umfasst, die die dielektrische reflektierende Oberfläche im Wesentlichen umgibt.

12. Sensorbaugruppe nach Anspruch 8, wobei die Membran (42) eine flache oder eine konkave reflektierende Oberfläche aufweist.

13. Sensorbaugruppe nach Anspruch 1, die ferner einen Schlauch (910) umfasst, der mindestens einen Abschnitt der optischen Faser (25) so umhüllt, dass ein biegsamer Wandler gebildet wird.

14. Sensorbaugruppe nach Anspruch 1, wobei die Ausrichtungsvorrichtung den keilförmigen Abstandshalter (61) umfasst, der sich zwischen der Linse (30) und der reflektierenden Oberfläche (49) befindet und derart positioniert ist, dass er bei der Verwendung den von der Linse (30) durchgelassenen Lichtstrahl im Wesentlichen senkrecht zu der reflektierenden Oberfläche (49) ausrichtet,
wobei der Sensor eine Fabry-Perot-Sensor-Baugruppe ist und die Linse (30) eine Kugellinse ist; wobei die Sensorbaugruppe ferner umfasst:
ein Fenster (15), das eine erste Oberfläche (51) und eine zweite Oberfläche (52) aufweist;
eine Membran (42), die von der zweiten Oberfläche (52) des Fensters (15) beabstandet und parallel dazu ist, wobei die Membran (42) die reflektierende Oberfläche (49) umfasst und wobei die reflektierende Oberfläche (49) teilweise reflektierend ist.

15. Sensorbaugruppe nach Anspruch 14, wobei die Kugellinse (30) an der optischen Faser (25) befestigt ist.

16. Sensorbaugruppe nach Anspruch 15, wobei das Befestigen der Kugellinse (30) an der Faser (25) durch Schmelzen eines Endes der Faser (25) auf eine kontrollierte Weise bewerkstelligt wird.

17. Sensorbaugruppe nach Anspruch 14, die ferner einen Schlauch (910) umfasst, der mindestens einen Abschnitt der optischen Faser (25) umhüllt, um einen biegsamen Wandler zu bilden.

## Revendications

1. Ensemble capteur comportant :
une fibre optique (25) ayant un axe optique (27) ;
une lentille (30) en communication optique avec ladite fibre optique (25), ladite lentille (30) ayant un axe optique (32) et ladite lentille (30) étant capable d'émettre un faisceau de lumière ;
une surface réfléchissante (49), ladite surface réfléchissante (49) étant espacée de ladite lentille (30), de sorte que ledit faisceau de lumière émis depuis ladite lentille (30) soit capable de se réfléchir à partir de ladite surface réfléchissante (49) en retour vers ladite lentille (30) ; et
un dispositif d'alignement comportant une fenêtre en forme de cale (15) ou un écarteur en forme de cale (61) situé entre ladite lentille (30) et ladite surface réfléchissante (49) et positionné de sorte que, en cours d'utilisation, il ou elle aligne ledit faisceau de lumière émis à partir de ladite lentille (30) sensiblement perpendiculairement à ladite surface réfléchissante (49).

2. Ensemble capteur selon la revendication 1, dans lequel le dispositif d'alignement comporte l'écarteur en forme de cale (61) situé entre ladite lentille (30) et ladite surface réfléchissante (49) et positionné de sorte que, en cours d'utilisation, il aligne ledit faisceau de lumière émis à partir de ladite lentille (30) sensiblement perpendiculairement à ladite surface réfléchissante (49),
l'ensemble capteur comportant en outre :
une fenêtre transparente (15) avec une surface partiellement réfléchissante (52), dans lequel ladite surface partiellement réfléchissante (52) de ladite fenêtre (15) est sensiblement parallèle à ladite surface réfléchissante (49) et séparée de celle-ci par un espace, ladite fenêtre optiquement transparente (15) et ladite surface réfléchissante (49) formant un capteur Fabry-Perot (40).

3. Ensemble capteur selon la revendication 2, dans lequel ladite lentille (30) comporte au moins un élément parmi : une lentille sphérique (230) ; une lentille à gradient d'indice ; une lentille qui focalise la lumière ; et une lentille qui collimate la lumière.

4. Ensemble capteur selon la revendication 3, comportant en outre une virole (20) enserrant ladite fibre optique (25), ladite virole (20) alignant ledit axe optique (27) de ladite fibre optique (25) sur ledit axe optique (32) de ladite lentille (30).

5. Ensemble capteur selon la revendication 3, dans lequel ladite lentille sphérique (230) est fixée à ladite fibre optique (25) pour aligner ledit axe optique (27) de ladite fibre optique (25) sur ledit axe optique (32) de ladite lentille (30).

6. Ensemble capteur selon la revendication 5, dans lequel ladite lentille sphérique (230) est fixée à ladite fibre optique (25) par fusion ou liaison de ladite lentille sphérique (230) à ladite fibre optique (25).

7. Ensemble capteur selon la revendication 4, dans lequel ladite lentille sphérique (230) n'est pas fixée à ladite fibre optique (25).

8. Ensemble capteur selon la revendication 1, dans lequel ladite surface réfléchissante (49) est un diaphragme (42).

9. Ensemble capteur selon la revendication 8, dans lequel ledit diaphragme (42) comporte au moins un élément parmi : un diaphragme plat; un diaphragme mésa ; un diaphragme à clapet ; et un diaphragme à soufflet.

10. Ensemble capteur selon la revendication 8, dans lequel ledit diaphragme (42) a une surface réfléchissante diélectrique.

11. Ensemble capteur selon la revendication 10, dans lequel ledit diaphragme (42) comporte un diaphragme mésa (500), ledit diaphragme mésa (500) comportant une rainure circulaire (510) entourant sensiblement ladite surface réfléchissante diélectrique.

12. Ensemble capteur selon la revendication 8, dans lequel ledit diaphragme (42) a une surface réfléchissante plate ou concave.

13. Ensemble capteur selon la revendication 1, comportant en outre un tube flexible (910) enserrant au moins une portion de ladite fibre optique (25) pour former un transducteur flexible.

14. Ensemble capteur selon la revendication 1, dans lequel le dispositif d'alignement comporte l'écarteur en forme de cale (61) situé entre ladite lentille (30) et ladite surface réfléchissante (49) et positionné de sorte que, en cours d'utilisation, il aligne ledit faisceau de lumière émis à partir de ladite lentille (30) sensiblement perpendiculairement avec ladite surface réfléchissante (49),
dans lequel le capteur est un ensemble capteur Fabry-Perot et la lentille (30) est une lentille sphérique ; l'ensemble capteur comportant en outre :
une fenêtre (15) ayant une première surface (51) et une seconde surface (52) ;
un diaphragme (42) espacé de ladite seconde surface (52) de ladite fenêtre (15) et parallèle à celle-ci, ledit diaphragme (42) incluant la surface réfléchissante (49) et dans lequel la surface réfléchissante (49) est partiellement réfléchissante.

15. Ensemble capteur selon la revendication 14, dans lequel ladite lentille sphérique (30) est fixée à ladite fibre optique (25).

16. Ensemble capteur selon la revendication 15, dans lequel la fixation de ladite lentille sphérique (30) à ladite fibre (25) est accomplie par fusion d'une extrémité de ladite fibre (25) de manière commandée.

17. Ensemble capteur selon la revendication 14, comportant en outre un tube flexible (910) enserrant au moins une portion de ladite fibre optique (25) pour former un transducteur flexible.
